# EUROPÄISCHE PATENTSCHRIFT

(11) **EP 1 066 177 B1**
(45) Veröffentlichungstag und Bekanntmachung des Hinweises auf die Patenterteilung: **19.06.2002**
(21) Anmeldenummer: 99922045.2
(22) Anmeldetag: 19.03.1999
(51) Int. Cl.: B60R 21/00

(54) **VERFAHREN ZUM BETREIBEN EINES ÜBER EINE BUSLEITUNG VERNETZTEN RÜCKHALTESYSTEMS BEI EINER FEHLERHAFTEN STROMVERSORGUNG**
METHOD FOR OPERATING A RESTRAINT SYSTEM CONNECTED TO A BUS LINE DURING FAULTY POWER SUPPLY
PROCEDE PERMETTANT DE FAIRE FONCTIONNER UN SYSTEME DE RETENUE CONNECTE PAR UNE LIGNE DE BUS EN CAS D'ALIMENTATION EN COURANT DEFECTUEUSE

(30) Priorität: 28.03.1998 DE 19813921
(43) Veröffentlichungstag der Anmeldung: 10.01.2001
(73) Patentinhaber: ROBERT BOSCH GMBH, 70442 Stuttgart (DE); Conti Temic microelectronic GmbH, 90411 Nürnberg (DE)
(72) Erfinder: NITSCHKE, Werner, D-71254 Ditzingen (DE); KARL, Otto, D-71229 Leonberg (DE); BAUER, Joachim, D-71720 Oberstenfeld-Prevorst (DE); BISCHOFF, Michael, D-85111 Adelschlag (DE); FENDT, Günter, D-86529 Schrobenhausen (DE); RINKENS, Johannes, D-85055 Ingolstadt (DE); SCHÄFFER, Stefan, D-86529 Schrobenhausen (DE); MÜLLER, Norbert, D-86529 Schrobenhausen (DE)
(86) Internationale Anmeldenummer: DE9900778
(87) Internationale Veröffentlichungsnummer: WO9950101

(56) Entgegenhaltungen:
- DE-A- 19 519 130
- DE-C- 19 609 076

## Beschreibung

### Stand der Technik

Die vorliegende Erfindung betrifft ein Verfahren zum Betreiben eines über eine Busleitung vernetzten Rückhaltesystems bei einer fehlerhaften Stromversorgung, wobei an die Busleitung eine zentrale Steuereinheit und mehrere Datenverarbeitungseinheiten angekoppelt sind, von denen jede zur Ansteuerung ein oder mehrerer Rückhalteeinrichtungen vorgesehen ist, und von der zentralen Steuereinheit aus die Stromversorgung der Datenverarbeitungseinheiten erfolgt.

Dokument DE-A-19519130 offenbart im wesentlichen den Oberbegriff des Anspruchs 1, mit der Ausnahme, daß in diesem Dokument nicht beschrieben wird, wie das Rückhaltesystem betrieben wird, wenn die Stromversorgung fehlerhaft ist.

Die Leistungsfähigkeit der Rückhaltesysteme in Fahrzeugen wird künftig stark zunehmen, um den Schutz der Fahrzeuginsassen weiter zu verbessern. Das bedeutet, daß die Zahl der Rückhalteeinrichtungen und deren zugehöriger Auslösemittel im Fahrzeug drastisch ansteigen wird. Zu diesen Rückhalteeinrichtungen gehören dann z.B. Airbags für den Fahrer und Beifahrer, wobei diese mehrstufig gezündet werden können, Kniebags für Fahrer und Beifahrer, Seitenairbags für Fahrer, Beifahrer und Fond-Insassen, wobei Seitenairbags sowohl für den Kopf- als auch Thoraxbereich vorgesehen werden können, Gurtstrammer, die auch mehrstufig aktivierbar sind, eventuell auch Überrollbügel etc. Es wird also für jeden Fahrzeuginsassen ein komplexes Schutzsystem, das aus mehreren Rückhalteeinrichtungen besteht, im Fahrzeug installiert sein.

In den Conference Proceedings des SAE International Congress & Exposition, 24. bis 27.02.1997, Detroit wird in dem Beitrag "Bussystem zur Vernetzung von Aktuatoren für Rückhaltesysteme" von J. Bauer, G. Mehler, W. Nitschke ein komplexes Rückhaltesystem beschrieben. Durch Einführung eines Bussystems, das alle Rückhalteeinrichtungen miteinander vernetzt, konnten voluminöse Kabelbäume eingespart werden. Für jede Rückhalteeinrichtung ist bei diesem bekannten System eine Datenverarbeitungseinheit vorgesehen, die im wesentlichen eine Recheneinheit, Daten-Eingangs- und Ausgangsschaltungen, eine Speichereinheit, eine Zeit- und Taktbasis und eine Stromversorgung aufweist. Diese auch als periphere intelligente Zündendstufe bezeichnete Datenverarbeitungseinheit ist in unmittelbarer Nähe des zu der jeweiligen Rückhalteeinrichtung gehörenden Auslösemittels, nämlich in einem Zündpillenstecker oder auf einem Substrat der Zündpille selbst, angeordnet.

Von einer zentralen Steuereinheit aus erhält jede Datenverarbeitungseinheit über eine Busleitung ihre Versorgungsenergie. Außerdem ermittelt die zentrale Steuereinheit anhand mehrerer Sensorsignale - z.B. von Beschleunigungssensoren, Precrashsensoren, Sitzbelegungssensoren - welche Rückhalteeinrichtungen auszulösen sind. Dementsprechend adressiert die zentrale Steuereinheit mit Hilfe eines über die Busleitung übertragenen Protokolls die betroffenen Datenverarbeitungseinheiten. Auch Diagnoseanforderungen gehen von der zentralen Steuereinheit aus über die Busleitung an die einzelnen Datenverarbeitungseinheiten, welche ihre Diagnoseantworten wiederum an die zentrale Steuereinheit über den Bus zurücksenden.

Eine wesentliche Forderung an ein Rückhaltesystem in einem Fahrzeug besteht darin, daß es möglichst weitgehend funktionsfähig bleibt, auch wenn Schaltungsdefekte in der zentralen Steuereinheit oder in den Datenverarbeitungseinrichtungen auftreten. Ein solcher Defekt wäre z.B. der Ausfall oder fehlerhafte Betrieb der Stromversorgung in der zentralen Steuereinheit. Der Erfindung liegt daher die Aufgabe zu Grunde, ein Verfahren der eingangs genannten Art anzugeben, das es ermöglicht, auch bei einer fehlerhaften Stromversorgung das Rückhaltesystem für einen Auslösefall funktionsfähig zu halten.

### Vorteile der Erfindung

Die genannte Aufgabe wird mit den Merkmalen des Anspruchs 1 dadurch gelöst, daß bei einem Defekt der eigentlichen Stromversorgung in der zentralen Steuereinheit auf die Batteriespannung des Fahrzeugs als neue Versorgungsspannung umgeschaltet wird, daß dann die zentrale Steuereinheit allen Datenverarbeitungseinheiten an der Busleitung die Umschaltung auf die neue Versorgungsspannung signalisiert und daß daraufhin die Datenverarbeitungseinheiten ihre Schaltungen an den neuen Versorgungsspannungspegel anpassen. Diese Maßnahmen gewährleisten, daß alle Rückhalteeinrichtungen im Fahrzeug, selbst bei einem Ausfall der eigens für das Rückhaltesystem vorgesehenen Stromversorgung, noch sicher ausgelöst werden können.

Vorteilhafte Weiterbildungen der Erfindung gehen aus den Unteransprüchen hervor.

Ein in jeder Datenverarbeitungseinheit vorhandener Komparator zur Erfassung eines Kurzschlusses auf der Busleitung wird auf eine Referenzspannung umgeschaltet, die der neuen Versorgungsspannung entspricht.

Die zentrale Steuereinheit sendet nach der Anpassung der Datenverarbeitungseinheiten an die neue Versorgungsspannung außer Auslösebefehlen für Rückhalteeinrichtungen keine anderen Informations- oder Steuersignale mehr an die Datenverarbeitungseinheiten aus.Damit ist sichergestellt, daß Auslösebefehle von der zentralen Steuereinheit ungehindert zu den Rückhalteeinrichtungen gelangen können.

### Beschreibung eines Ausführungsbeispiels

Anhand eines in der Zeichnung dargestellten Ausführungsbeispiels wird nachfolgend die Erfindung näher erläutert. Es zeigen:
Figur 1 ein Blockschaltbild eines Rückhaltesystems,
Figur 2 ein Blockschaltbild einer Datenverarbeitungseinheit und
Figur 3 ein Ablaufdiagramm für das erfindungsgemäße Verfahren.

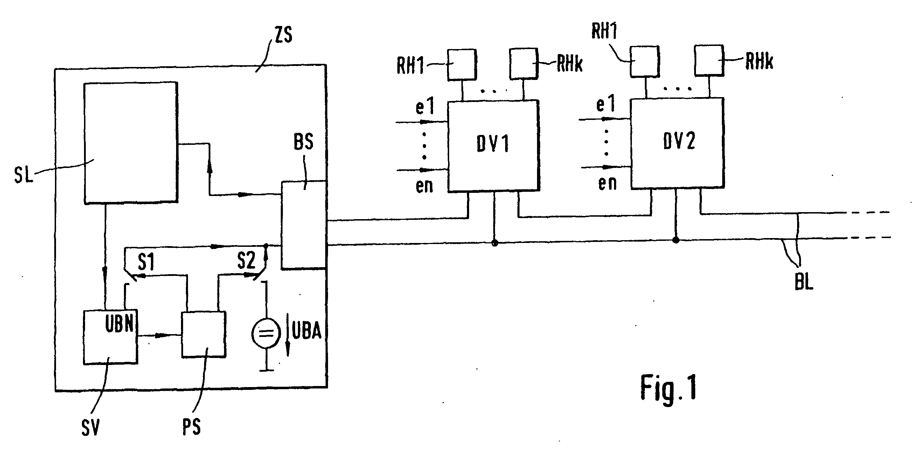

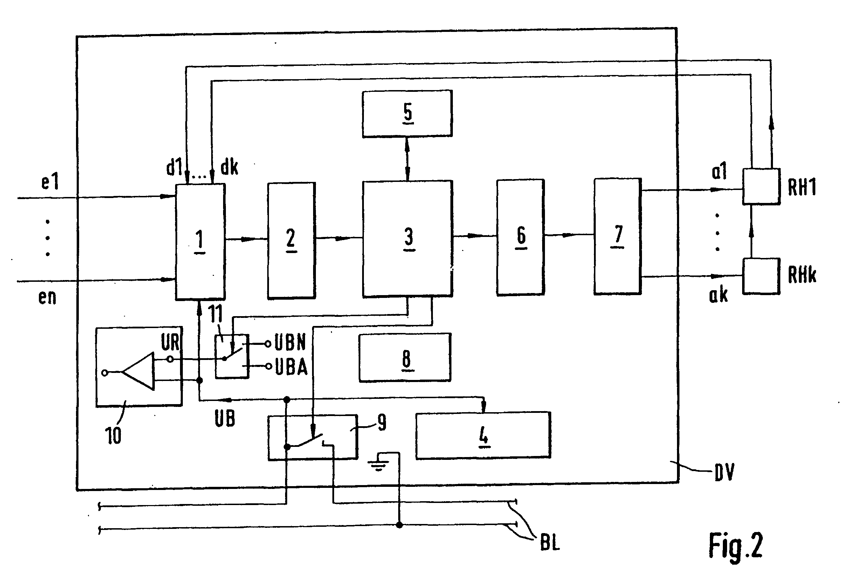

Das in der Figur 1 dargestellte Rückhaltesystem besteht aus einer zentralen Steuereinheit ZS, mit der über eine Busleitung BL mehrere Datenverarbeitungseinheiten DV1, DV2 gekoppelt sind. Jede dieser in der Zeichnung beispielhaft dargestellten zwei Datenverarbeitungseinheiten DV1 und DV2 dient zur Ansteuerung einer oder mehrerer Rückhalteeinrichtungen RH1, ..., RHk. Wie bereits einleitend aufgezählt, gehören zu diesen Rückhalteeinrichtungen RH1, ..., RHk ein oder mehrstufig zündbare Fahrer- und Beifahrerairbags, Kniebags, Seitenairbags, Gurtstrammer usw.. Bei der im Zusammenhang mit Figur 2 noch näher erläuterten Ausführung der Datenverarbeitungseinheiten DV1, DV2 sind neben den Eingängen für die Busleitung BL noch Weitere Eingänge el, ..., en für weitere Eingangssignale, z.B. Sensorsignale, vorgesehen.

In dem dargestellten Ausführungsbeispiel hat die Busleitung BL die Form einer Stichleitung, sie kann aber auch als Ringleitung ausgeführt sein.

Die zentrale Steuereinheit ZS besitzt im wesentlichen eine Steuerlogikschaltung SL eine Stromversorgung SV und eine Busschnittstelle BS, in der sich z.B. Signaltreiber für die auf die Busleitung BL auszusendenden Informations- und Steuersignale befinden. Außerdem ist in der zentralen Steuereinheit ZS eine Prüfschaltung PS vorhanden, welche die Funktionsfähigkeit der Stromversorgung SV kontrolliert. Diese Prüfschaltung PS, welche z.B. auch in der Stromversorgung SV oder in der Steuerlogikschaltung SL integriert sein kann, schaltet bei einem Fehler der Stromversorgung SV deren Versorgungsspannung UBN über einen Schalter S1 ab und an dessen Stelle die Batteriespannung UBA des Fahrzeugs über einen Schalter S2 als neue Versorgungsspannung ein.

Alle Datenverarbeitungseinheiten DV1, DV2 besitzen die gleiche Schaltungsstruktur. Deshalb wird stellvertretend für alle Datenverarbeitungseinheiten anhand von Figur 2 eine Datenverarbeitungseinheit DV detailliert beschrieben. An diese Datenverarbeitungseinheit DV sind mehrere Rückhalteeinrichtungen RH1, ..., RHk angeschlossen. Vorzugsweise ist diese Gruppe von k Rückhalteeinrichtungen RH1, ..., RHk einem Fahrzeuginsassen zugeordnet. Handelt es sich z.B. um den Beifahrer, dann könnten zu den Rückhalteeinrichtungen RH1, ..., RHk ein Frontairbag, ein oder zwei Seitenairbags im Kopf- und Thoraxbereich, ein Kniebag und ein Gurtstrammer gehören, wobei alle Airbags und der Gurtstrammer auch mehrstufig auslösbar sein können. Für jede dieser Rückhalteeinrichtungen RH1, ... RHk generiert die Datenverarbeitungseinheit DV im Crashfall ein Auslösesignal a1, ..., ak, wobei die Auswahl der auszulösenden Rückhalteeinrichtungen und die Auslösezeitpunkte in Abhängigkeit von mehreren Eingangssignalen e1, ..., en getroffen werden. Die Eingangssignale e1, ..., en stammen von Sensoren, zu denen ein oder mehrere das kinetische Verhalten des Fahrzeugs bei einem Crash erfassende Beschleunigungssensoren, Precrashsensoren, Gurtschloßsensoren und Sitzbelegungssensoren gehören können. Aus den Sitzbelegungssensoren leitet die Datenverarbeitungseinheit DV ab, ob der Beifahrersitz überhaupt belegt ist, ob ein Kind oder ein Erwachsener dort sitzt und auch welche Sitzhaltung der Beifahrer hat, so daß dementsprechend nur solche Rückhalteeinrichtungen ausgelöst werden, die der Person überhaupt einen Schutz bieten können und sie nicht sogar eher verletzen würden. Ebenso wird die Auslösung der Rückhalteeinrichtungen ganz unterdrückt, wenn der Beifahrersitz gar nicht belegt ist oder sich darauf ein Kindersitz oder Gepäckstück befindet.

In der Figur 2 sind die einzelnen Funktionselemente innerhalb der Datenverarbeitungseinheit DV im Form von Blöcken angedeutet. Es gibt eine Signal- Eingangsschaltung 1 für die Aufnahme analoger oder digitaler Eingangssignale el, ..., en, welche z. B. Signaltreiber und eventuell einen Multiplexer für die Umwandlung parallel anliegender Eingangssignale in einen seriellen Datenstrom enthält. In der anschließenden Datenaufbereitungsschaltung 2 kann eine Analog-Digital-Umsetzung analoger Eingangssignale erfolgen; in jedem Fall werden hier die Daten so aufbereitet, daß sie von einer nachfolgenden Recheneinheit 3 digital weiterverarbeitet werden können.

Diese Recheneinheit 3 erledigt sämtliche Steuerfunktionen in der Datenverarbeitungseinheit DV. Z.B. ermittelt sie aus den Eingangssignalen e1, ..., en, welche der angeschlossenen Rückhalteeinrichtungen RH1, ..., RHk zu welchen Zeitpunkten ausgelöst werden sollen. Auch führt sie eine Diagnose der Zündelemente in den Rückhalteeinrichtungen RH1, ..., RHk durch. Dazu werden Diagnossignale d1, ..., dk - das sind z.B. Widerstandswerte der Zündelemente - der Signal-Eingangsschaltung 1 zugeführt. Die Recheneinheit 3 vergleicht die Diagnosesignale d1, ..., dk mit Referenzwerten und gibt bei unzulässigen Abweichungen eine Fehlermeldung aus. Auch wird eine Diagnose einer Energiereserve, die sich in einem Stromversorgungsteil 4 befindet, durchgeführt.

Eine Speichereinheit 5 dient der Aufnahme von temporären Daten, wie z.B. Zündelementwiderstände und Energiezustände der Energiereserve etc., ebenso können fertigungsspezifische Daten und Kennungsdaten in der Speichereinheit 5 abgelegt werden. Die Recheneinheit 3 kann auf die Daten in der Speichereinheit 5 zugreifen und neue Daten darin einschreiben.

Entsprechend der Eingangsseite der Datenverarbeitungseinheit DV folgen ausgangsseitig nach der Recheneinheit 3 eine Datenaufbereitungsschaltung 6 und eine Signal-Ausgangsschaltung 7. In der Datenaufbereitungsschaltung 6 werden z.B. die digitalen Auslöseinformationen oder Diagnoseabfragesignale aus der Recheneinheit 3 in Zündströme oder Prüfströme für die Zündelemente der Rückhalteeinrichtungen RH1, ..., RHk umgesetzt. Die Signal-Ausgangsschaltung 7 ist mit Signaltreibern und eventuell einem Demultiplexer ausgestattet, der einen seriellen Ausgangssignal-Datenstrom in die einzelnen parallelen Ausgangssignale a1, ..., ak aufteilt. Eine in der Datenverarbeitungseiheit DV vorhandene Zeit- und Taktbasis 8 versorgt alle Funktionsblöcke mit einem einheitlichen synchronen Takt.

Natürlich ist die in der Figur 2 dargestellte Aufteilung der Funktionsblöcke nicht zwingend. Es können z.B. die Signal-Eingangsschaltung 1 und die Datenaufbereitungsschaltung 2 bzw. die Signal-Ausgangsschaltung 3 und die Datenaufbereitungschaltung 7 miteinander kombiniert und auch teilweise in der Recheneinheit 3 integriert werden. Ebenso können die Stromversorgung 4 und/oder die Zeit- und Taktbasis 8 in den Datenaufbereitungsschaltungen 2, 6 integriert werden. Es sind viele Möglichkeiten gegeben, mehrere Funktionen in einem Schaltblock zusammenzufassen.

Es handelt sich bei der beschriebenen Datenverarbeitungseinheit DV um eine Zündendstufe mit relativ hohem Intelligenzgrad, da sie in Abhängigkeit von Eingangssignalen e1, ..., en autark, d.h. unabhängig von Steuersignalen der zentralen Steuereinheit ZS, über das Auslösen von Rückhalteeinrichtungen RH1, ..., RHk entscheiden kann. Für die Realisierung der erfindungsgemäßen Idee ist es aber nicht erforderlich, daß die Datenverarbeitungseinheiten autarke Entscheidungsfunktion haben. Es können genauso gut alle Auslöseentscheidungen und Diagnoseanforderungen von der zentralen Steuereinheit ZS getroffen und in den Datenverarbeitungseinheiten DV umgesetzt werden.

Jede Datenverarbeitungseinheit DV besitzt einen sogenannten Längsschalter 9, mit dessen Hilfe sie die Busleitung BL auftrennen oder durchschalten kann. Der Längsschalter 9 wird von der Recheneinheit 3 gesteuert. Dabei kann eine Aufforderung zum Schließen oder Öffnen des Längsschalters 9 von der zentralen Steuereinheit ZS über die Busleitung BL übertragen werden. Somit ist es möglich, einzelne Datenverarbeitungseinheiten an der Busleitung BL gezielt anzusprechen und mit Informationen oder Steuersignalen zu versorgen.

Von dem Längsschalter 9 wird die Busspannung UB abgegriffen, um sie einerseits dem Stromversorgungsteil 4 und andererseits der Signal-Eingangsschaltung 1 zuzuführen. Das Stromversorgungsteil 4 entnimmt der Busspannung UB den für die Aufladung einer Energiereserve erforderlichen Energieanteil.

In der Datenverarbeitungseinheit DV befindet sich auch eine Komparatorschaltung 10, deren Eingänge einerseits an der Busspannung UB und andererseits an einer Referenzspannung UR liegen. Die Referenzspannung UR entspricht bei fehlerfreier Funktion des Rückhaltesystems, insbesondere bei fehlerfreier Spannungsversorgung SV der zentralen Steuereinheit ZS und kurzschlußfreier Busleitung BL der von der Stromversorgung SV gelieferten Normal-Versorgungsspannung UBN. Dementsprechend verbindet ein von der Recheneinheit 3 gesteuerter Schalter 11 den Eingang der Komparatorschaltung 10 für die Referenzspannung UR mit einem Anschluß, dessen Potential der Normal-Versorgungsspannungen UBN entspricht. Ein zweiter Anschluß des Schalters 11 liegt an einem Potential, das der Batteriespannung UBA des Fahrzeugs entspricht. Beide Potentiale UBN und UBA werden vom Stromversorgungsteil 4 bereitgestellt und können z.B. über einen Spannungsteiler gebildet werden. Durch Vergleich der Busspannung UB mit der Normal-Versorgungsspannung UBN im Komparator 10 ist es möglich, einen Kurzschluß auf der Busleitung BL zu detektieren. Außerdem kann in derselben oder einer weiteren Komparatorschaltung 10 durch Vergleich der Busspannung UB mit der Normal-Versorgungsspannung UBN als Referenzspannung UR unterschieden werden, ob die zentrale Steuereinheit ZS ein Auslösesignal oder irgend ein anderes Steuersignal, die mit unterschiedlichen Signalpegel übertragen werden, an die Datenverarbeitungseinheit DV ausgesendet hat.

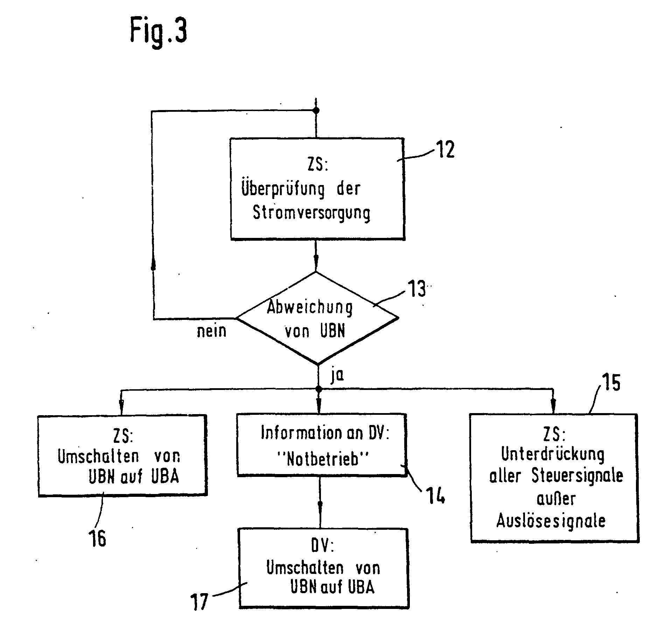

Anhand der Figur 3 wird nun beschrieben, welches Verfahren in der zentralen Steuereinheit ZS und in den Datenverarbeitungseinheiten DV bei einer Störung der Stromversorgung abläuft, um das Rückhaltesystem in einem Notbetrieb funktionsfähig zu halten.

Wie durch Block 12 angedeutet, wird in der zentralen Steuereinheit ZS mit der bereits erwähnten Prüfschaltung PS die Stromversorgung SV in der zentralen Steuereinheit ZS überprüft. Dies kann durch einen einfachen Spannungsvergleich der aktuell von der Stromversorgung SV gelieferten Versorgungsspannung UBN mit einem Spannungsnormal erfolgen. Wird, wie durch Block 13 angedeutet, keine Abweichung von der vorgegebenen Normal-Versorgungsspannung UBN festgestellt, das gleichbedeutend ist mit der fehlerfreien Funktion der Stromversorgung SV, wird der normale Betrieb des Rückhaltesystems aufrecht erhalten. Weicht aber die von der Stromversorgung SV gelieferte Versorgungsspannung von der Normal-Versorgungsspannung UBN ab, dann wird folgender Prozeß, gesteuert durch die Steuerlogikschaltung SL, in Gang gesetzt:

Die zentrale Steuereinheit ZS sendet an alle Datenverarbeitungseinheiten DV an der Busleitung BL ein Informationssignal aus, das einen Notbetrieb signalisiert (siehe Block 14). Danach unterdrückt die zentrale Steuereinheit ZS gemäß Block 15 alle Steuersignale (z.B. Diagnoseanfrage) und läßt nur noch die Übertragung von Aulösesignalen an die Datenverarbeitungseinrichtungen zu.

Während oder bevor die zentrale Steuereinheit ZS ihr Informationssignal über den Notbetrieb absetzt, erfolgt für die beiden Schalter S1 und S2 die Umschaltung von der Normal-Versorgungsspannung UBN auf die Batteriespannung UBA des Fahrzeugs.

Nachdem die Datenverarbeitungseinheiten die Information über den Notbetrieb erhalten haben, wird in jeder Datenverarbeitungseinheit, gesteuert durch den Rechner 3, die Referenzspannung UR für die Komparatorschaltung 10 mit dem Schalter 11 von der Normal-Versorgungsspannung UBN auf die Batteriespannung UBA umgeschaltet. Die Normal-Versorgungsspannung UBN beträgt z.B. 27 Volt und die Batteriespannung UBA 12 Volt. Wenn nun alle zuständigen Schaltungen, stellvertretend dafür die Komparatorschaltung 10, in den Datenverarbeitungseinheiten DV an den neuen Versorgungsspannungspegel UBA angepaßt sind, ist das Rückhaltesystem uneingeschränkt auslösebereit.

## Patentansprüche

1. Verfahren zum Betreiben eines über eine Busleitung vernetzten Rückhaltesystems bei einer fehlerhaften Stromversorgung, wobei an die Busleitung eine zentrale Steuereinheit und mehrere Datenverarbeitungseinheiten angekoppelt sind, von denen jede zur Ansteuerung ein oder mehrerer Rückhalteeinrichtungen vorgesehen ist, und von der zentralen Steuereinheit aus die Stromversorgung der Datenverarbeitungseinheiten erfolgt, **dadurch gekennzeichnet, daß** bei einem Defekt der eigentlichen Stromversorgung (SV) in der zentralen Steuereinheit (ZS) auf die Batteriespannung (UBA) des Fahrzeugs als neue Versorgungsspannung umgeschaltet wird, daß die zentrale Steuereinheit (ZS) allen Datenverarbeitungseinheiten (DV, DV1, DV2) an der Busleitung (BL) die Umschaltung auf die neue Versorgungsspannung (UBA) signalisiert und daß darauf die Datenverarbeitungseinheiten (DV, DV1, DV2) ihre Schaltungen (10) an den neuen Versorgungsspannungspegel (UBA) anpassen.

2. Verfahren nach Anspruch 1, **dadurch gekennzeichnet, daß** ein in jeder Datenverarbeitungseinheit (DV, DV1, DV2) vorhandener Komparator (10) zur Erfassung eines Kurzschlusses auf der Busleitung (BL) auf eine Referenzspannung (UR) umgeschaltet wird, die der neuen Versorgungsspannung (UBA) entspricht.

3. Verfahren nach Anspruch 1, **dadurch gekennzeichnet, daß** die zentrale Steuereinheit (ZS) nach der Anpassung der Datenverarbeitungseinheiten (DV, DV1, DV2) an die neue Versorgungsspannung (UBA) außer Auslösebefehlen für Rückhalteeinrichtungen (RH1, ..., RHk) keine anderen Informations- oder Steuersignale mehr an die Datenverarbeitungseinheiten (DV, DV1, DV2) aussendet.

## Claims

1. Method for operating a restraint system, which is networked via a bus line, in the event of a faulty power supply, with a central control unit and a number of data processing units being coupled to the bus line, each of which is intended to actuate one or more restraint devices, and with the power being supplied to the data processing units from the central control unit, **characterized in that**, in the event of a defect in the actual power supply (SV) in the central control unit (ZS), a changeover is made to the battery voltage (UBA) of the vehicle as the new supply voltage, **in that** the central control unit (ZS) signals the changeover to the new supply voltage (UBA) to all the data processing units (DV, DV1, DV2)on the bus line (BL), and **in that** the data processing units (DV, DV1, DV2) then match their circuits (10) to the new supply voltage level (UBA).

2. Method according to Claim 1, **characterized in that** a comparator (10), which is provided in each data processing unit (DV, DV1, DV2), for detecting a short circuit on the bus line (BL), is changed over to a reference voltage (UR) which corresponds to the new supply voltage (UBA).

3. Method according to Claim 1, **characterized in that**, once the data processing units (DV, DV1, DV2) have been matched to the new supply voltage (UBA), the central control unit (ZS) no longer emits any information or control signals to the data processing units (DV, DV1, DV2), apart from initiation commands for restraint devices (RH1, ..., RHk).

## Revendications

1. Procédé de mise en oeuvre d'un système de retenue branché en réseau par l'intermédiaire d'un bus en cas de défaut d'alimentation électrique, avec une unité de commande centrale et plusieurs unités de traitement de données couplées au bus, et prévues chacune pour commander une ou plusieurs installations de retenue, l'unité de commande centrale assurant l'alimentation électrique des unités de traitement de données,
**caractérisé en ce qu'**
en cas de défaut de l'alimentation électrique proprement dite (SV) dans l'unité de commande centrale (ZS), on commute sur la tension de batterie (UVA) du véhicule comme nouvelle tension d'alimentation,
l'unité de commande centrale (ZS) signale à toutes les unités de traitement de données (DV, DV1, DV2) reliées au bus (BL), la commutation suivant la nouvelle tension d'alimentation (UVA), et
ensuite les unités de traitement de données (DV, DV1, DV2) adaptent leur circuit (10) au nouveau niveau de tension d'alimentation (UVA).

2. Procédé selon la revendication 1,
**caractérisé en ce qu'**
un comparateur (10) équipant chaque unité de traitement de données (DV, DV1, DV2) pour détecteur un court-circuit du bus (BL) est commuté sur une tension de référence (UR) qui correspond à la nouvelle tension d'alimentation (UBA).

3. Procédé d'alimentation selon la revendication 1,
**caractérisé en ce que**
l'unité de commande centrale (ZS), après l'adaptation des unités de traitement de données (DV, DV1, DV2) à la nouvelle tension d'alimentation (UBA), ne transmet plus aucun autre signal d'information ou de commande en dehors des ordres de déclenchement des installations de retenue (RH1 ... RHk) aux unités de traitement de données (DV, DV1, DV2).
